(19) Europäisches Patentamt
European Patent Office
Office européen des brevets

(11) Veröffentlichungsnummer : **0 084 136**
**B1**

(12) # EUROPÄISCHE PATENTSCHRIFT

(45) Veröffentlichungstag der Patentschrift : **05.03.86**

(51) Int. Cl.⁴ : **C 07 F 9/18**, A 01 N 57/14

(21) Anmeldenummer : **82111713.2**

(22) Anmeldetag : **16.12.82**

(54) **2-Trifluormethylphenyl-(di)thiophosphorsäureester, Verfahren zu ihrer Herstellung und ihre Verwendung zur Bekämpfung von Schädlingen.**

(30) Priorität : **16.01.82 DE 3201227**

(43) Veröffentlichungstag der Anmeldung : **27.07.83 Patentblatt 83/30**

(45) Bekanntmachung des Hinweises auf die Patenterteilung : **05.03.86 Patentblatt 86/10**

(84) Benannte Vertragsstaaten : **BE CH DE FR GB IT LI NL**

(56) Entgegenhaltungen :
**DE-A- 2 327 377**
**FR-A- 2 130 597**
**CHEMICAL ABSTRACTS, Band 98, Nr. 9, 28. Februar 1983, Seite 659, Nr. 72436t, Columbus, Ohio, USA**
**CHEMICAL ABSTRACTS, Band 97, Nr. 19, 8. November 1982, Seite 741, Nr. 163252a, Columbus, Ohio, USA**
**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Seufert, Walter, Dr.**
**Lärchenweg 19**
**D-6720 Speyer (DE)**
Erfinder : **Varwig, Juergen, Dr.**
**Am Goetzenberg 1**
**D-6900 Heidelberg (DE)**
Erfinder : **Seppelt, Wolfgang, Dr.**
**Lucas-Cranach-Strasse 8**
**D-6712 Bobenheim-Roxheim (DE)**
Erfinder : **Adolphi, Heinrich, Dr.**
**Kalmitweg 11**
**D-6703 Limburgerhof (DE)**

**EP 0 084 136 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft 2-Trifluormethylphenyl-(di)thiophosphorsäureester, ein Verfahren zu ihrer Herstellung und Schädlingsbekämpfungsmittel, die diese Verbindungen als Wirkstoffe enthalten.

Es ist bekannt, daß O,O-Dialkyl-O-(4-trifluormethylphenyl)-thionophosphorsäureester als nematizide und bodeninsektizide Mittel verwendet können (DE-OS 2 149 312).

Es wurde gefunden, daß 2-Trifluormethylphenyl-(di)thiophosphorsäureester der Formel

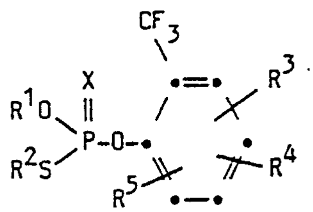

(I)

in der

$R^1$ Alkyl mit 1 bis 3 Kohlenstoffatomen,

$R^2$ Alkyl mit 1 bis 5 Kohlenstoffatomen, Alkoxyalkyl oder Alkylthioalkyl mit 2 bis 8 Kohlenstoffatomen oder Cycloalkyl mit 3 bis 6 Kohlenstoffatomen,

$R^3$, $R^4$, $R^5$ unabhängig voneinander Wasserstoff, Cyan, Halogen, durch gegebenenfalls mit Halogen, Cyano, Alkoxy oder Alkylthio mit jeweils 1 bis 4 Kohlenstoffatomen substituiertes Alkyl mit 1 bis 4 Kohlenstoffatomen und

X Sauerstoff oder Schwefel bedeuten,

Schädlinge aus der Klasse der Insekten, Spinnentiere und Nematoden wirksam bekämpfen. Sie sind bekannten Thiophosphorsäuseestern analoger Konstitution, so den O,O-Dialkyl-O-(4-trifluormethylphenyl)-thionophosphorsäureestern oder dem O-Ethyl-S-propyl-S-(2-trifluormethylphenyl)-dithiophosphorsäureester in ihrer Wirkung überlegen (vgl. FR-A 2 130 597).

In Formel I stehen die Substituenten $R^1$ für Alkylreste mit 1 bis 3 Kohlenstoffatomen, wie Methyl, Ethyl, n-Propyl, i-Propyl, $R^2$ für Alkylreste mit 1 bis 5 Kohlenstoffatomen, wie Methyl, Ethyl, n-Propyl, i-Propyl, n-Butyl, sec-Butyl, i-Butyl, n-Pentyl, 1-Methyl-n-butyl, für Alkoxyalkyl- oder Alkylthioalkylreste mit 2 bis 8, vorzugsweise 2 bis 5 Kohlenstoffatomen, wie 2-Methoxyethyl, 2-Ethoxyethyl, 2-Isopropoxyethyl, 2-Methylthioethyl, 2-Ethylthioethyl, oder für Cycloalkylreste mit 3 bis 6 Kohlenstoffatomen, wie Cyclopentyl, Cyclohexyl, sowie $R^3$, $R^4$ und $R^5$, die verschieden sein können, für Wasserstoff, Halogen, wie Chlor, Brom oder Fluor, für Alkyl mit 1 bis 4 Kohlenstoffatomen, vorzugsweise mit 1 oder 2 Kohlenstoffatomen, wie Methyl, Ethyl, n-Propyl, tert.-Butyl, die durch Halogen, wie Chlor, Cyano, Alkoxy oder Alkylthio mit jeweils 1 bis 4 Kohlenstoffatomen, wie Methoxy, Methylthio, Ethoxy, Ethylthio, substituiert sein können.

Man erhält die 2-Trifluormethylphenyl-(di)thiophosphorsäureester der Formel I durch Umsetzung von O,S-Dialkylphosphorsäureesterchloriden der Formel

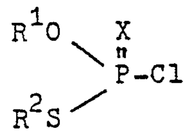

(II)

in der $R^1$, $R^2$ und X die oben angegebenen Bedeutungen haben, gegebenenfalls in Gegenwart eines säurebindenden Mittels und gegebenenfalls in Gegenwart eines Verdünnungsmittels mit einem 2-Trifluormethylphenol der Formel

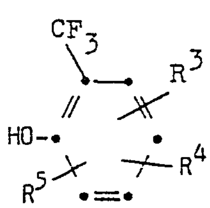

(III)

in der $R^3$, $R^4$ und $R^5$ die oben genannten Bedeutungen haben, oder mit einem Salz eines 2-Trifluormethylphenols der Formel III gegebenenfalls in Gegenwart eines Verdünnungsmittels.

Der Reaktionsablauf kann durch das folgende Formelschema wiedergegeben werden :

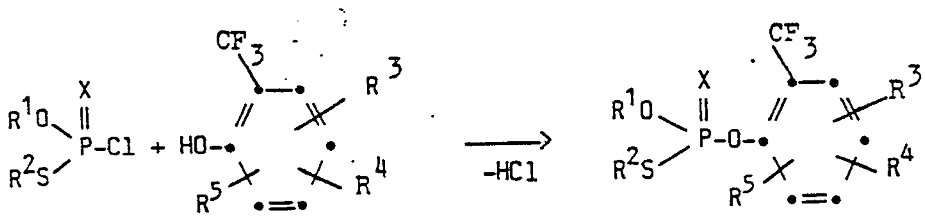


Die Umsetzung von Phosphorsäureesterchlorid der Formel II mit Phenol der Formel III kann in einem organischen Verdünnungsmittel, wie Aceton, Acetonitril, Benzol, Toluol, Chlorbenzol, Methylethylketon, oder in zwei-Phasen-Systemen, wie Toluol/Wasser, Dichlormethan/Wasser, durchgeführt werden.

Zweckmäßigerweise setzt man die 1- bis 2-molare Menge eines säurebindenden Mittels, bezogen auf Phenol der Formel III, zu. Vorzugsweise wird ein Überschuß von etwa 10 % verwendet. Geeignet sind Basen, wie Alkalimetallcarbonate, z. B. Kaliumcarbonat, Alkalihydroxide, z. B. Natriumhydroxid, oder tertiäre Amine, z. B. Triäthylamin. Anstelle von Base und Phenol kann ebenso ein Salz des Phenols mit den Phosphorsäureesterchlorid umgesetzt werden. Als Salze kommen Alkalimetallsalze, Erdalkalimetallsalze oder gegebenenfalls substituierte Ammoniumsalze, wie Alkylammoniumsalze, beispielsweise Dimethylammoniumsalze, Triethylammoniumsalze, Natrium- und Calciumsalze, in Betracht.

Die Reaktionstemperatur kann in einem größeren Bereich variiert werden. Im allgemeinen arbeitet man zwischen 0 und 100 °C, vorzugsweise zwischen 20 und 70 °C. Man läßt die Umlsetzung im allgemeinen unter Normaldruck ablaufen.

Zur Durchführung des Verfahrens setzt man die Ausgangsstoffe in äquimolarem Verhältnis ein. Ein Überschuß der einen oder anderen Reaktionskomponente kann in einigen Fällen Vorteile bringen. Zweckmäßigerweise verwendet man auf 1 Mol Phenol 0,9 bis 1,1 Mole Phosphorsäureesterchlorid.

Das Reaktionsgemisch wird in üblicher Weise aufgearbeitet, z. B. durch Versetzen mit Wasser und Trennen der Phasen. Die Rohprodukte können durch Destillation oder Säulenchromatographie gereinigt werden.

O,S-Dialkylphosphorsäureesterchloride der Formel II sind bekannt und können nach bekannten Verfahren hergestellt werden (DE-OS 2 642 982 ; J. Org. Chem. 30, 3217 (1965)).

Die 2-Trifluormethylphenole der Formel III lassen sich ebenfalls nach bekannten Verfahren herstellen (JACS 69, 2346 (1947)).

Folgende weitere Verfahren führen ebenfalls zu den erfindungsgemäßen Verbindungen :

2-Trifluormethylphenyl-thiophosphorsäureester der Formel Ia lassen sich in einer Arbusow-Reaktion durch Umsetzung von Phosphorigsäureestern der Formel IV mit Sulfenylchloriden der Formel $R^2SCl$ nach folgendem Reaktionsschema herstellen :

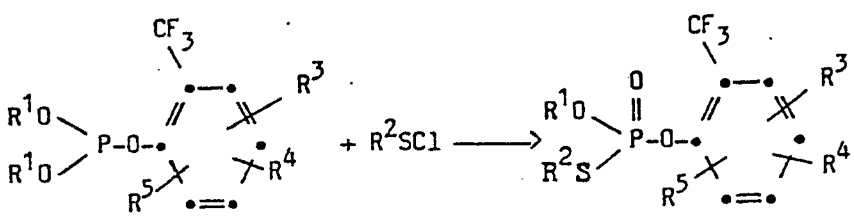

(IV) Ia

Ebenso sind die 2-Trifluormethylphenyl-thiophosphorsäureester der Formel Ia durch Alkylierung von Phosphorsäureestersalzen der Formel V mit Alkylierungsmitteln der Formel $R^2Y$ zugänglich :

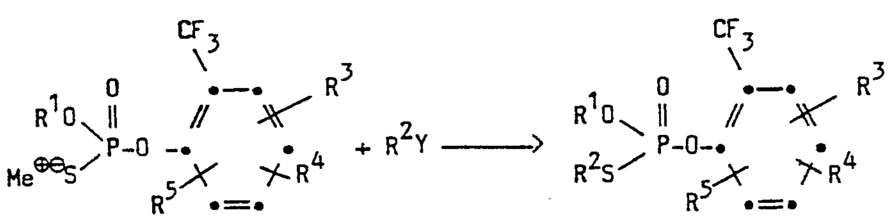

(V) Ia

Außerdem lassen sich Phosphorsäureesterdichloride der Formel VI mit Alkoholen und Mercaptanen der Formeln $R^1OH$ bzw. $R^2SH$ zu Verbindungen der Formel I umsetzen :

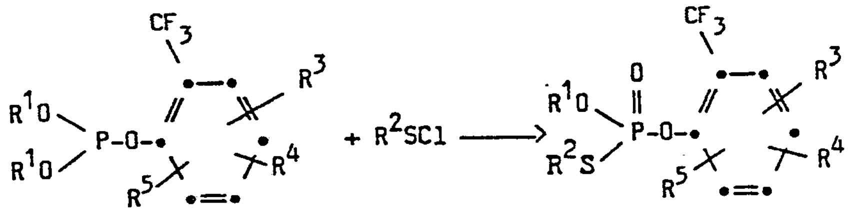


(IV) (Ia)

In diesen Reaktionsschemata haben die Substituenten $R^1$, $R^2$, $R^3$, $R^4$ und $R^5$ sowie X die oben genannten Bedeutungen. $Me^{\oplus}$ steht für ein Metallkation oder ein gegebenenfalls durch Alkylgruppen substituiertes Ammoniumion und Y bedeutet Halogenid, beispielsweise Jodid, Bromid, Chlorid, oder Alkylsulfat, beispielsweise Methylsulfat.

Beispiel 1

Zu 8,9 g 2-Trifluormethylphenol und 7,6 g Kaliumcarbonat in 100 ml Acetonitril wurden 10,1 g O-Ethyl-S-propylthiophosphorsäureesterchlorid zugetropft. Dann wurde 4 Stunden bei 50 °C und anschließend 12 Stunden bei Raumtemperatur gerührt.

Dann wurde das Lösungsmittel am Rotationsverdampfer entfernt, der Rückstand mit 400 ml Toluol und 100 ml Wasser versetzt, die Phasen getrennt und die organische Phase mit 2 n Natronlauge und anschließend mit Wasser gewaschen. Nach dem Trocknen mit Natriumsulfat wurden das Lösungsmittel und flüchtige Verunreinigungen unter vermindertem Druck bei 40 °C und 0,1 mbar entfernt. Als Rückstand wurden 10,2 g Produkt vom Brechungsindex $n_D^{21} = 1,480\ 5$ erhalten.

Folgende Verbindungen wurden nach einem der angegebenen Verfahren erhalten :

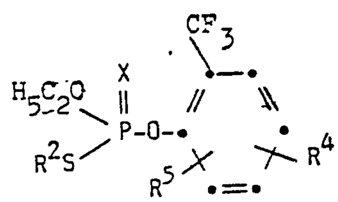

| Nr. | $R^2$ | X | $R^4$ | $R^5$ | $R^3 = H$ | $n_D$ |
|---|---|---|---|---|---|---|
| 1 | $n-C_3H_7$ | O | H | H | | $n_D^{21} = 1.4805$ |
| 2 | $s-C_4H_9$ | O | H | H | | $n_D^{21} = 1.4783$ |
| 3 | $n-C_3H_7$ | O | H | H | | $n_D^{22} = 1.4773$ |
| 4 | $C_2H_5O-(CH_2)_2$ | O | H | H | | $n_D^{25} = 1.4835$ |
| 5 | $n-C_3H_7$ | S | H | H | | $n_D^{22} = 1.5130$ |
| 6 | $s-C_4H_9$ | S | H | H | | $n_D^{21} = 1.5100$ |
| 7 | $i-C_4H_9$ | S | H | H | | $n_D^{27} = 1.5085$ |
| 8 | $n-C_3H_7$ | O | 4-Br | H | | $n_D^{24} = 1.5054$ |
| 9 | $i-C_4H_9$ | O | 4-Br | H | | $n_D^{23} = 1.5011$ |

(Fortsetzung)

| Nr. | $R^2$ | X | $R^4$ | $R^5$ | $R^3$ = H | $n_D$ |
|---|---|---|---|---|---|---|
| 10 | $n-C_3H_7$ | S | 4-Br | H | | $n_D^{22}$ = 1.5341 |
| 11 | $s-C_4H_9$ | S | 4-Br | H | | $n_D^{23}$ = 1.5307 |
| 12 | $i-C_4H_9$ | S | 4-Br | H | | $n_D^{24}$ = 1.5289 |
| 13 | $n-C_3H_7$ | O | 4-Cl | H | | $n_D^{20}$ = 1.4900 |
| 14 | $s-C_4H_9$ | O | 4-Cl | H | | $n_D^{20}$ = 1.4870 |
| 15 | $n-C_3H_7$ | O | 4-Br | 6-Br | | $n_D^{22}$ = 1.5222 |
| 16 | $n-C_3H_7$ | S | 4-Br | 6-Br | | $n_D^{21}$ = 1.5478 |
| 17 | $n-C_3H_7$ | O | 4-Cl | 6-Cl | | $n_D^{19}$ = 1.5700 |
| 18 | $s-C_4H_9$ | O | 4-Cl | 6-Cl | | $n_D^{19}$ = 1.5045 |
| 19 | $i-C_4H_9$ | O | 4-Cl | 6-Cl | | $n_D^{18}$ = 1.5045 |

Analog können folgende Verbindungen der Formel I erhalten werden :

| Nr. | $R^1$ | $R^2$ | X | $R^3$ | $R^4$ | $R^5$ |
|---|---|---|---|---|---|---|
| 20 | $C_2H_5$ | $n-C_3H_7$ | O | H | H | 6-Br |
| 21 | $C_2H_5$ | $n-C_3H_7$ | O | H | H | 6-Cl |
| 22 | $C_2H_5$ | $n-C_3H_7$ | O | H | 4-CN | H |
| 23 | $C_2H_5$ | $n-C_3H_7$ | O | H | $4-CH_3$ | H |
| 24 | $C_2H_5$ | $n-C_3H_7$ | S | H | 4-Cl | H |
| 25 | $C_2H_5$ | $n-C_3H_7$ | S | H | 4-Cl | 6-Cl |
| 26 | $C_2H_5$ | $n-C_3H_7$ | O | H | H | H |
| 27 | $C_2H_5$ | $i-C_3H_7$ | O | H | 4-Cl | H |
| 28 | $C_2H_5$ | $i-C_3H_7$ | O | H | 4-Br | H |
| 29 | $C_2H_5$ | $i-C_3H_7$ | S | H | H | H |
| 30 | $C_2H_5$ | $s-C_4H_9$ | O | H | H | 6-Br |
| 31 | $C_2H_5$ | $s-C_4H_9$ | O | H | 4-Br | H |
| 32 | $C_2H_5$ | $s-C_4H_9$ | O | H | H | 6-Cl |
| 33 | $C_2H_5$ | $s-C_4H_9$ | S | H | 4-Cl | H |
| 34 | $CH_3$ | $n-C_3H_7$ | O | H | H | H |
| 35 | $CH_3$ | $n-C_3H_7$ | S | H | H | H |
| 36 | $CH_3$ | $s-C_4H_9$ | O | H | H | H |

(Fortsetzung)

| Nr. | $R^1$ | $R^2$ | X | $R^3$ | $R^4$ | $R^5$ |
|---|---|---|---|---|---|---|
| 37 | $CH_3$ | $s-C_4H_9$ | S | H | H | H |
| 38 | $CH_3$ | $n-C_3H_7$ | O | H | 4-Br | H |
| 39 | $CH_3$ | $n-C_3H_7$ | O | 6-Br | H | H |
| 40 | $CH_3$ | $n-C_3H_7$ | O | H | 4-Cl | H |
| 41 | $CH_3$ | $n-C_3H_7$ | O | H | H | 6-Cl |

Die 2-Trifluormethylphenyl-(di)thiophosphorsäureester der Formel I sind geeignet, Schädlinge aus der Klasse der Insekten, Spinnentiere und Nematoden wirksam zu bekämpfen. Sie können im Pflanzenschutz sowie auf dem Hygiene-, Vorratsschutz- und Veterinärsektor als Schädlingsbekämpfungsmittel eingesetzt werden.

Zu den schädlichen Insekten gehören aus der Ordnung der Schmetterlinge (Lepidoptera) beispielsweise Plutella maculipennis (Kohlschabe), Leucoptera coffeella (Kaffeemotte), Hyponomeuta malinellus (Apfelbaumgespinstmotte), Argyresthia conjugella (Apfelmotte), Sitotroga cerealella (Getreidemotte), Phthorimaea operculella (Kartoffelmotte), Capua reticulana (Apfelschalenwickler), Sparganothis pilleriana (Springwurm), Cacoecia murinana (Tannentriebwickler), Tortrix viridana (Eichenwickler), Clysia ambiguella (Heu- und Sauerwurm), Evetria buoliana (Kieferntriebwickler), Polychrosis botrana (Bekreuzter Traubenwickler), Cydia pomonella (Obstmade), Laspeyresia molesta (Pfirsichtriebbohrer), Laspeyresia funebrana (Pflaumenwickler), Ostrinia nubilalis (Maiszünsler), Loxostege sticticalis (Rübenzünsler), Ephestia kuehniella (Mehlmotte), Chilo suppressalis (Reisstengelbohrer), Galleria mellonella (Wachsmotte), Malacosoma neustria (Ringelspinner), Dendrolimus pini (Kiefernspinner), Thaumatopoea pityocampa (Pinienprozessionsspinner), Phalera bucephala (Mondfleck), Cheimatobia brumata (Kleiner Frostspanner), Hibernia defoliaria (Großer Frostspanner), Bupalus piniarius (Kiefernspanner), Hyphantria cunea (Weißer Bärenspinner), Agrotis segetum (Wintersaateule), Agrotis ypsilon (Ypsiloneule), Barathra brassicae (Kohleule), Cirphis unipuncta (Heerwurm), Prodenia litura (Baumwollraupe), Laphygma exigua (Rüben-Heerwurm), Panolis flammea (Forleule), Earias insulana (Baumwollkapselwurm), Plusia gamma (Gammaeule), Alabama argillacea (Baumwollblattwurm), Lymantria dispar (Schwammspinner), Lymantria monacha (Nonne), Pieris brassicae (Kohlweißling), Aporia crataegi (Baumweißling) ;

aus der Ordnung der Käfer (Coleoptera) beispielsweise Blitophaga undata (Schwarzer Rübenaaskäfer), Melanotus communis (Drahtwurm), Limonius californicus (Drahtwurm), Agriotes lineatus (Saatschnellkäfer), Agriotes obscurus (Humusschnellkäfer), Agrilus sinuatus (Birnbaum-Prachtkäfer), Meligethes aeneus (Rapsglanzkäfer), Atomaria linearis (Moosknopfkäfer), Epilachna varivestris (Mexikanischer Bohnenkäfer), Phyllopertha horticola (Junikäfer), Popillia japonica (Japankäfer), Melolontha melolontha (Feldmaikäfer), Melolontha hippocastani (Waldmaikäfer), Amphimallus solstitialis (Brachkäfer), Crioceris asparagi (Spargelhähnchen), Lema melanopus (Getreidehähnchen), Leptinotarsa decemlineata (Kartoffelkäfer), Phaedon cochleariae (Meerrettich-Blattkäfer), Phyllotreta nemorum (Kohlerdfloh), Chaetocnema tibialis (Rübenflohkäfer), Phylloides chrysocephala (Raps-Flohkäfer), Diabrotica 12-punctata (Südlicher Maiswurzelwurm), Cassida nebulosa (Nebliger Schildkäfer), Bruchus lentis (Linsenkäfer), Bruchus rufimanus (Pferdebohnenkäfer), Bruchus pisorum (Erbsenkäfer), Sitona lineatus (Linierter Blattrandkäfer), Otiorrhynchus sulcatus (Gefurchter Lappenrüßler), Otiorrhynchus ovatus (Erdbeerwurzelrüßler), Hylobies abietis (Großer Brauner Rüsselkäfer), Byctiscus betulae (Rebenstecher), Anthonomus pomorum (Apfelblütenstecher), Anthonomus grandis (Kapselkäfer), Ceuthorrhynchus assimilis (Kohlschotenrüßler), Ceuthorrhynchus napi (Großer Kohltriebrüßler), Sitophilus granaria (Kornkäfer), Anisandrus dispar (Ungleicher Holzborkenkäfer), Ips typographus (Buchdrucker), Blastophagus piniperda (Gefurchter Waldgärtner) ;

aus der Ordnung der Zweiflügler (Diptera) beispielsweise Lycoria pectoralis, Mayetiola destructor (Hessenfliege), Dasineura brassicae (Kohlschoten-Gallmücke), Contarinia tritici (Gelbe Weizen-Gallmücke), Haplodiplosis equestris (Sattelmücke), Tipula paludosa (Wiesenschnake), Tipula oleracea (Kohlschnake), Dacus cucurbitae (Melonenfliege), Dacus oleae (Olivenfliege), Ceratitis capitata (Mittelmeerfruchtfliege), Rhagoletis cerasi (Kirschfruchtfliege), Rhagoletis pomonella (Apfelmade), Anastrepha ludens (Mexikanische Fruchtfliege), Oscinella frit (Fritfliege), Phorbia coarctata (Brachfliege), Phorbia antiqua (Zwiebelfliege), Phorbia brassicae (Kleine Kohlfliege), Pegomya hyoscyami (Rübenfliege), Anopheles maculipennis, Culex pipiens, Aedes aegypti (Gelbfiebermücke), Aedes vexans, Tabanus bovinus (Rinderbremse), Tipula paludosa (Wiesenschnake), Musca domestica (Stubenfliege), Fannia canicularis (Kleine Stubenfliege), Muscina stabulans, Glossina morsitans (Tsetse-Fliege), Oestrus ocis, Chrysomya macellaria, Chrysomya hominivorax, Lucilia cuprina, Lucilia sericata, Hypoderma lineata ;

aus der Ordnung der Hautflügler (Hymenoptera) beispielsweise Athalia rosae (Rübenblattwespe),

Hoplocampa minuta (Pflaumensägewespe), Monomorium pharaonis (Pharaoameise), Solenopsis geminata (Feuerameise), Atta sexdens (Blattschneiderameise) ;

aus der Ordnung der Wanzen (Heteroptera) beispielsweise Nezara viridula (Grüne Reiswanze), Eurygaster integriceps (Asiatische Getreidewanze), Blissus leucopterus (Chinch bug), Dysdercus cingulatus (Kapok-Wanze), Dysdercus intermedius (Baumwollzanze), Piesma quadrata (Rübenwanze), Lygus pratensis (Gemeine Wiesenwanze) ;

aus der Ordnung der Pflanzensauger (Homoptera) beispielsweise Perkinsiella saccharicida (Zuckerrohrzikade), Nilaparvata lugens (Braune Zikade), Empoasca fabae (Kartoffelzikade), Psylla mali (Apfelblattsauger), Psylla piri (Birnblattsauger), Trialeurodes vaporariorum (Weiße Fliege), Aphis fabae (Schwarze Bohnenlaus), Aphis pomi (Grüne Apfellaus), Aphis sambuci (Holunderblattlaus), Aphidula nastrutii (Kreuzdornblattlaus), Cerosipha gossypii (Gurkenblattlaus), Sappaphis mali (Rosige Apfellaus), Sappaphis mala (Mehlige Birnblattlaus), Dysphis radicola (Mehlige Apfelfalterlaus), Brachycaudus cardui (Große Pflaumenblattlaus), Brevicoryne brassicae (Kohlblattlaus), Phorodon humuli (Hopfenblattlaus), Rhopalomyzus ascalonicus (Zwiebellaus), Myzodes persicae (Grüne Pfirsichlaus), Myzus cerasi (Schwarze Sauerkirschenlaus), Dysaulacorthum pseudosolani (Gefleckte Kartoffellaus), Acyrthosiphon onobrychis (Grüne Erbsenlaus), Macrosiphon rosae (Große Rosenblattlaus), Megoura viciae (Wickenlaus), Schizoneura lanuginosa (Birnenblattlaus), Pemphigus bursarius (Salatwurzellaus), Dreyfusia nordmannianae (Tannentrieblaus), Dreyfusia piceae (Weißtannenstammlaus), Adelges laricis (Rote Fichtengallenlaus), Viteus vitifolii (Reblaus) ;

aus der Ordnung der Termiten (Isoptera) beispielsweise Reticulitermes lucifugus, Calotermes flavicollis, Leucotermes flavipes, Termes natalensis ;

aus der Ordnung der Geradflügler (Orthoptera) beispielsweise Forficula auricularia (Gemeiner Ohrwurm), Acheta domestica (Heimchen), Gryllotalpa gryllotalpa (Maulwurfsgrille), Tachycines asynamorus (Gewächshausschrecke), Locusta migratoria (Wanderheuschrecke), Stauronotus maroccanus (Marokkanische Wanderheuschrecke), Schistocerca peregrina (Wanderheuschrecke), Nomadacris septemfasciata (Wanderheuschrecke), Melanoplus spretus (Felsengebirgsheuschrecke), Melano plus femur-rubrum (Rotbeinige Heuschrecke), Blatta orientalis (Küchenschabe), Blattella germanica (Deutsche Schabe), Periplaneta americana (Amerikanische Schabe), Blabera gigantea (Riesenschabe).

Zur Klasse der Arachnoidea gehören Spinnentiere (Acarina) beispielsweise Ixodes ricinus (Holzbock), Ornithodorus moubata, Amblyomma americanum, Dermacentor silvarum, Boophilus microplus, Tetranychus telarius, Tetranychus atlanticus, Tetranychus pacificus, Paratetranychus pilosus, Bryobia praetiosa.

Zur Klasse der Nemathelminthes zählen beispielsweise Wurzelgallennematoden, z. B. Meloidogyne incognita, Meloidogyne hapla, Meloidogyne javanica, Zysten bildende Nematoden, z. B. Heterodera rostochiensis, Heterodera schachtii, Heterodera avenae, Heterodera glycines, Heterodera triflolii, Stock- und Blattälchen, z. B. Ditylenchus dipsaci, Ditylenchus destructor, Pratylenchus neglectus, Pratylenchus penetrans, Partylenchus goodeyi, Paratylenchus curvitatus sowie Tylenchorhynchus dubius, Tylenchorhynchus claytoni, Rotylenchus robustus, Heliocotylenchus multicinctus, Radopholus similis, Belonolaimus longicaudatus, Longidorus elongatus, Trichodorus primitivus.

Die Wirkstoffe können als solche, in Form ihrer Formulierungen oder den daraus bereiteten Anwendungsmöglichkeiten, z. B. in Form von direkt versprühbaren Lösungen, Pulvern, Suspensionen oder Dispersionen, Emulsionen, Öldispersionen, Pasten, Stäubemitteln, Streumitteln, Granulaten durch Versprühen, Vernebeln, Verstäuben, Verstreuen oder Gießen angewendet werden. Die Anwendungsformen richten sich ganz nach den Verwendungszwecken ; sie sollten in jedem Fall möglichst die feinste Verteilung der erfindungsgemäßen Wirkstoffe gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z. B. Benzol, Toluol, Xylol, Paraffin, Tetrahydronaphthalin, alkylierte Naphthaline oder deren Derivate, z. B. Methanol, Ethanol, Propanol, Butanol, Chloroform, Tetrachlorkohlenstoff, Cyclohexanol, Cyclohexanon, Chlorbenzol, Isophoron, stark polare Lösungsmittel, z. B. Dimethylformamid, Dimethylsulfoxid, N-Methylpyrrolidon, Wasser, in Betracht.

Wäßrige Anwendungsformen können aus Emulsionskonzentraten, Pasten oder netzbaren Pulvern (Spritzpulvern, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Laurylethersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldehyd, Kondensationsprodukte des Naphthalins bzw. der Naphthalinsulfonsäuren mit

Phenol und Formaldehyd, Polyoxyethylenoctylphenolether, ethoxyliertes Isooctylphenol, Octylphenol, Nonylphenon, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Lignin, Sulfitablaugen und Methylcellulose in Betracht.

Pulver-, Streu- und Stäubemittel können durch Mischen oder gemeinsames Vermahlen der wirksamen Substanzen mit einem festen Trägerstoff hergestellt werden.

Beispiele für Formulierungen sind :

I. 5 Gewichtsteile der Verbindung Nr. 1 werden mit 95 Gewichtsteilen feinteiligem Kaolin innig vermischt. Man erhält auf diese Weise ein Stäubemittel, das 3 Gew.% des Wirkstoffs enthält.

II. 30 Gewichtsteile der Verbindung Nr. 2 werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

III. 10 Gewichtsteile der Verbindung Nr. 4 werden in einer Mischung gelöst, die aus 90 Gewichtsteilen Xylol, 6 Gewichtsteilen des Anlagerungsproduktes von 8 bis 10 Möl Äthylenoxid an 1 Mol Ölsäure-N-monoethanolamid, 2 Gewichtsteilen Calciumsalz der Dodecylbenzolsulfonsäure und 2 Gewichtsteilen des Anlagerungsproduktes von 40 Mol Ethylenoxid an 1 Mol Ricinusöl besteht.

IV. 20 Gewichtsteile der Verbindung Nr. 13 werden in einer Mischung gelöst, die aus 60 Gewichtsteilen Cyclohexanon, 30 Gewichtsteilen Isobutanol, 5 Gewichtsteilen des Anlagerungsproduktes von 7 Mol Ethylenoxid an 1 Mol Isooctylphenol und 5 Gewichtsteilen des Anlagerungsproduktes von 40 Mol Ethylenoxid an 1 Mol Ricinusöl besteht.

V. 80 Gewichtsteile der Verbindung Nr. 19 werden mit 3 Gewichtsteilen des Natriumsalzes der Diisobutylnaphthalin-alpha-sulfonsäure, 10 Gewichtsteilen des Natriumsalzes einer Ligninsulfonsäure aus einer Sulfit-Ablauge und 7 Gewichtsteilen pulverförmigem Kieselsäuregel gut vermischt und in einer Hammermühle vermahlen.

Granulate, z. B. Umhüllungs-, Imprägnierungs- und Homogengranulate, können durch Bindung der Wirkstoffe an feste Trägerstoffe hergestellt werden. Feste Trägerstoffe sind z. B. Mineralerden, wie Silicagel, Kieselsäuren, Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z. B. Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver und andere feste Trägerstoffe.

Die Formulierungen enthalten im allgemeinen zwischen 0,1 und 95 Gew.% Wirkstoff, vorzugsweise zwischen 0,5 und 90 Gew.%.

Die Wirkstoffkonzentrationen in den anwendungsfertigen Zubereitungen können in größeren Bereichen variiert werden.

Im allgemeinen liegen sie zwischen 0,000 1 und 10 %, vorzugsweise zwischen 0,01 und 1 %.

Die Wirkstoffe können auch mit gutem Erfolg im Ultra-Low-Volume-Verfahren (ULV) verwendet werden, wobei es möglich ist, Formulierungen mit mehr als 95 Gew.% Wirkstoff oder sogar den Wirkstoff ohne Zusätze auszubringen.

Die Aufwandmenge an Wirkstoff beträgt unter Freilandbedingungen 0,2 bis 10, vorzugsweise 0,5 bis 2,0 kg/ha.

Zu den Wirkstoffen können Öle verschiedenen Typs, Herbizide, Fungizide, andere Schädlingsbekämpfungsmittel, Bakterizide, gegebenenfalls auch erst unmittelbar vor der Anwendung (Tankmix), zugesetzt werden. Diese Mittel können zu den erfindungsgemäßen Mitteln im Gewichtsverhältnis 1 : 10 bis 10 : 1 zugemischt werden.

Beispielsweise können folgende Mittel zugemischt werden : 1,2-Dibrom-3-chlorpropan, 1,3-Dichlorpropen, 1,3-Dichlorpropen + 1,2-Dichlorpropan, 1,2-Dibrom-ethan, 2-sec.-Butyl-phenyl-N-methylcarbamat, o-Chlorphenyl-N-methylcarbamat, 3-Isopropyl-5-methylphenyl-N-methylcarbamat, o-Isopropoxyphenyl-N-methylcarbamat, 3,5-Dimethyl-4-methylmercapto-phenyl-N-methylcarbamat, 4-Dimethylamino-3,5-xylyl-N-methylcarbamat, 2-(1,3-Dioxolan-2-yl)-phenyl-N-methylcarbamat, 1-Naphthyl-N-methylcarbamat, 2,3-Dihydro-2,2-dimethyl-benzofuran-7-yl-N-methylcarbamat, 2,2-Dimethyl-1,3-benzodioxol-4-yl-N-methylcarbamat, 2-Dimethylamino-5,6-dimethyl-4-pyrimidinyl-dimethylcarbamat, 2-Methyl-2-(methylthio)-propionaldehyd-O-(methylcarbamoyl)-oxim, S-Methyl-N-[(methylcarbamoyl)-oxy]-thio-acetimidat, Methyl-N',N'-dimethyl-N-[(methylcarbamoyl)oxy]-1-thiooxamidat, N-(2-Methyl-chlor-phenyl)-N',N'-dimethylformamidin, Tetrachlorthiophen, 1-(2,6-Difluor-benzoyl)-3-(4-chlor-phenyl)-harnstoff, O,O-Dimetyl-O-(p-nitrophenyl)-phosphorthioat, O,O-Diethyl-O-(p-nitrophenyl)-phosphorthioat, O-Ethyl-O-(p-nitrophenyl)-phenyl-phosphonothioat, O,O-Dimethyl-O-(3-methyl-4-nitrophenyl)-phosphorthioat, O,O-Diethyl-O-(2,4-dichlorphenyl)-phosphorthioat, O-Ethyl-O-(2,4-dichlorphenyl)-phenyl-phosphonothioat, O,O-Dimethyl-O-(2,4,5-trichlorphenyl)-phosphorthioat, O-Ethyl-O-(2,4,5-trichlorphenyl)-ethyl-phosphonothioat,O,O-Dimethyl-O-(4-brom-2,5-dichlorphenyl)-phosphorthioat, O,O-Dimethyl-O-(2,5-dichlor-4-jodphenyl)-phosphorthioat, O,O-Dimethyl-O-(3-methyl-4-methylthiophenyl)-phosphorthioat, O-Ethyl-O-(3-methyl-4-methylthiophenyl)-isopropylphosphoramidat, O,O-Diethyl-O-[p-methylsulfinyl-phenyl]-phosphorthioat, O-Ethyl-S-phenyl-ethyl-phosphonodithioat, O,O-Diethyl-[2-chlor-1-(2,4-dichlorphenyl)-vinyl]-phos-

phat, O,O-Dimethyl-[-2-chlor-1-(2,4,5-trichlorphenyl)]-vinyl-phosphat, O,O-Dimethyl-S-(1'-phenyl)-ethylacetat-phosphordithioat, Bis-(dimethylamino-fluorphosphinoxid, Octamethyl-pyrophosphoramid, O,O,O,O-Tetraethyldithio-pyrophosphat, S-Chlormethyl-O,O-diethyl-phosphordithioat, O-Ethyl-S,S-dipropyl-phosphordithioat, O,O-Dimethyl-O-2,2-dichlorvinyl-phosphat, O,O-Dimethyl-1,2-dibrom-2,2-dichlorethylphosphat, O,O-Dimethyl-2,2,2-trichlor-1-hydroxy-ethylphosphonat, O,O-Dimethyl-S-[1,2-biscarbethoxy-ethyl-(1)]-phosphordithioat, O,O-Dimethyl-O-(1-methyl-2-carbmethoxy-vinyl)-phosphat, O,O-Dimethyl-S-(N-methyl-carbamoyl-methyl)-phosphordithioat, O,O-Dimethyl-S-(N-methyl-carbamoylmethyl)-phosphorthioat, O,O-Dimethyl-S-(N-methoxyethyl-carbamoyl-methyl)-phosphordithioat, O,O-Dimethyl-S-(N-formyl-N-methyl-carbamoylmethyl-phosphordithioat, O,O-Dimethyl-O-[1-methyl-2-(methylcarbamoyl)-vinyl]-phosphat, O,O-Dimethyl-O-[(1-methyl-dimethylcarbamoyl)-vinyl]-phosphat, O,O-Dimethyl-O-[(1-methyl-2-chlor-2-diethylcarbamoyl)-vinyl]-phosphat, O,O-Diethyl-S-(ethylthio-methyl)-phosphordithioat, O,O-Diethyl-S-[(p-chlorphenylthio)-methyl]-phosphordithioat, O,O-Dimethyl-S-(2-ethylthioethyl)-phosphorthioat, O,O-Dimethyl-S-(2-ethylthioethyl)-phosphordithioat, O,O-Dimethyl-S-(2-ethylsulfinyl-ethyl)-phosphorthioat, O,O-Diethyl-S-(2-ethylthio-ethyl)-phosphordithioat, O,O-Diethyl-S-(2-ethylsulfinyl-ethyl)-phosphorthioat, O,O-Diethyl-thiophosphoryliminophenyl-acetonitril, O,O-Diethyl-S-(2-chlor-1-phthalimidoethyl)-phosphordithioat, O,O-Diethyl-S-[6-chlor-benzoxazolon-(2)-yl(3)]-methyldithiophosphat, O,O-Dimethyl-S-[2-methoxy-1,3,4-thiadiazol-5-[4H]-onyl-(4)-methyl]-phosphordithioat, O,O-Diethyl-O-[3,5,6-trichlor-pyridyl-(2)]-phosphorthioat, O,O-Diethyl-O-(2-pyrazinyl)-phosphorthioat, O,O-Diethyl-O-[2-isopropyl-4-methyl-pyrimidinyl (6)]-phosphorthioat, O,O-Diethyl-O-[2-(diethylamino)-6-methyl-4-pyrimidinyl]-thionophosphat, O,O-Dimethyl-S-(4-oxo-1,2,3-benzotriazin-3-[4H]-yl-methyl)-phosphordithioat, O,O-Dimethyl-S-[(4,6-diamino-1,3,5-triazin-2-yl)-methyl]-phosphordithioat, O,O-Diethyl-(1-phenyl-1,2,4-triazol-3-yl)-thionophosphat, O,S-Dimethyl-phosphor-amido-thioat, O,S-Dimethyl-N-acetyl-phosphoramidothioat, γ-Hexachlorcyclohexan, 1,1-Di-(p-methoxyphenyl)-2,2,2-trichlor-ethan, 6,7,8,9,10,10-Hexachloro-1,5,5a,6,9,9a-hexahydro-6,9-methano-2,4,3-benzodioxa-thiepin-3-oxid, Pyrethrine, DL-2-Allyl-3-methyl-cyclopenten-(2)-on-(1)-yl-(4)-DL-cis, -trans-chrysanthemat, 5-Benzyl-furyl-(3)-methyl-DL-cis, -trans-chrysanthemat, 3-Phenoxybenzyl (±)-cis, trans-2,2-dimethyl-3-(2,2-dichlorvinyl)-cyclopropancarboxylat, -Cyano-3-phenoxybenzyl (±)-cis, trans-2,2-dimethyl-3-(2,2-dichlorvinyl)-cyclopropancarboxylat, (s)-α-Cyano-3-phenoxybenzyl-cis (1R, 3R)-2,2-dimethyl-3-(2,2-dibromvinyl)-cyclopropancarboxylat, 3,4,5,6-Tetrahydrophthalimido-ethyl-DL-cis, trans-chrysanthemat, 2-Methyl-5-(2-propinyl)-3-furylmethyl-chrysanthemat, (α-Cyano-3-phenoxybenzyl)-α-isopropyl-4-chlorphenylacetat.

Die folgenden Beispiele belegen die biologische Wirkung der Verbindungen. Vergleichsmittel ist der bekannte Wirkstoff, O,O-Diethyl-O-(4-trifluormethyl-phenyl)-thionophosphat (DE-OS 2 149 312).

Die Numerierung der Wirkstoffe entspricht der det tabellarischen Auflistung.

## Beispiel 1

Fraß- und Kontaktwirkung auf Raupen der Kohlschabe (Plutella maculipennis)

Blätter von jungen Kohlpflanzen werden 3 Sekunden lang in die wäßrige Wirkstoffemulsion getaucht und nach kurzem Abtropfen auf einen angefeuchteten Filter in eine Petrischale gelegt. Das Blatt wird darauf mit 10 Raupen des 4. Stadiums belegt. Nach 48 Stunden beurteilt man die Wirkung.

In diesem Test zeigen die Wirkstoffe Nr. 1, 2, 3, 4, 5, 6, 7, 8, 9, 10, 11, 12, 13, 14, 15, 16, 17, 18 und 19 eine überlegene Wirkung gegenüber dem Stand der Technik.

## Beispiel 2

Kontaktwirkung aus Moskito-Larven (Aedes aegypti)

200 ml Leitungswasser werden mit der Wirkstoffaufbereitung versetzt und darauf mit 30 bis 40 Moskito-Larven im 4. Larvenstadium versetzt. Die Versuchstemperatur beträgt 20 °C. Nach 24 Stunden wird die Wirkung ermittelt.

Bei diesem Test zeigen die Wirkstoffe Nr. 2, 5, 6, 8, 10, 11, 18 eine überlegene Wirkung gegenüber dem Stand der Technik.

## Beispiel 3

Kontaktwirkung auf Schaben (Blatta orientalis)

Der Boden eines 1 l-Einmachglases wird mit der acetonischen Lösung des Wirkstoffs behandelt. Nach dem Verdunsten des Lösungsmittels setzt man je Glas 5 adulte Schaben. Die Mortalitätsrate wird nach 48 Stunden bestimmt.

In diesem Test zeigen die Wirkstoffe Nr. 1, 2, 3, 4, 5, 8, 9, 10, 11, 17 und 18 eine bessere Wirkung als das Vergleichsmittel.

## Beispiel 4

Kontaktwirkung auf Zecken (Ornithodorus moubata)

Geprüft wird an jungen Zecken, die erst einmal Blut aufgenommen haben. Dazu taucht man je 5 Tiere, die sich in einem Papierbeutel befinden, für 5 Sekunden in die wäßrige Wirkstoffaufbereitung. Die Beutel werden frei aufgehängt. Die Versuchstemperatur beträgt 25 bis 26 °C. Nach 48 Stunden ermittelt man die Mortalitätsrate.

In diesem Test zeigen die Wirkstoffe Nr. 1, 2, 3, 4, 8, 9, 15, 17 und 19 eine bessere Wirkung als das Vergleichsmittel.

## Beispiel 5

Wirkung auf Wurzelgallennematoden (Meloidogyne incognita)

200 g Gartenerde, die stark mit Meloidogyne incognita infiziert ist, werden mit 30 ml der wäßrigen Wirkstoffaufbereitung innig vermischt. Die Erde wird darauf in Plastiktöpfe gefüllt und mit Tomatensetzlingen bepflanzt. Die Versuchstemperatur liegt nicht unter + 22 °C.

Nach 6 bis 8 Wochen bonitiert man die Wurzeln auf Gallenbildung.

Bei diesem Test zeigen die Wirkstoffe Nr. 1, 2, 3, 4, 5, 6, 7, 9, 10, 11, 12 und 13 eine überlegene Wirkung.

## Beispiel 6

Wirkung auf Spinnmilben (Tetranychus telarius)

Getopfte Buschbohnen, die das erste Folgeblattpaar entwickelt haben und einen starken Besatz aller Stadien der Spinnmilbe Tetranychus telarius tragen, werden in der Spritzkabine mit wäßrigen Wirkstoffaufbereitungen tropfnaß gespritzt. Die Pflanzen kommen dazu auf einen Drehteller und werden von allen Seiten mit 50 ml Spritzbrühe besprüht. Der Sprühvorgang dauert ca. 22 Sekunden.

Nach 8 Tagen werden die Pflanzen auf lebende Spinnmilben untersucht.

In diesem Test zeigen die Wirkstoffe Nr. 8, 9, 10, 11, 15, 18 und 19 eine überlegene Wirkung gegenüber dem Stand der Technik.

## Beispiel 7

Kontaktwirkung auf Baumwollwanzen (Dysdercus intermedius)

Petrischalen von 10 cm Durchmesser werden mit 1 ml acetonischer Wirkstofflösung ausgekleidet.

Nach dem Verdunsten der Lösungsmittels besetzt man die Schalen mit je 20 Larven des vorletzten Stadiums und registriert die Wirkung nach 24 Stunden.

In diesem Test zeigen die Wirkstoffe Nr. 1, 2, 3, 4, 5, 6, 7, 8, 9, 10, 11, 15, 17, 18 und 19 eine überlegene Wirkung.

## Beispiel 8

Systemische Wirkung auf Raupen (Prodenia litura)

200 ml Quarzsand werden in 250 ml-Kunststoffbecher in Paletten zu 8 Gefäßen gegeben. Man belegt jeden Becher mit 5 Maiskörnern (ca. 1 cm unter die Oberfläche). Darauf befeuchtet man mit je 50 ml Wasser und deckt mit einer passenden transparenten Kunststoffhaube ab. Nach 8 Tagen werden die Paletten abgedeckt, nach 10 Tagen erfolgt die Behandlung. Dabei gießt man 40 ml der wäßrigen Wirkstoffaufbereitung an die Pflanzen und deckt nach einem weiteren Tag mit 50 ml trockenem Quarzsand ab. Hierdurch soll ein Kontakt der Versuchstiere mit der behandelten Oberfläche vermieden werden.

Auf jeden Becher stellt man einen Plastik-Zylinder (Durchmesser 7 cm), belegt mit je 5 Raupen im 3. Larvenstadium und deckt den Zylinder mit einem Drahtgazedeckel ab. Nach 4 Tagen beurteilt man Fraß und Mortalität in den Gefäßen. Es soll dabei sowohl eine systemische Giftwirkung, wie eine Fraßverhinderung erkannt werden.

In diesem Test zeigen die Wirkstoffe Nr. 1, 2, 3, 4, 5, 6, 7, 8, 9, 10, 11, 15, 16, 17, 18 und 19 eine bessere Wirkung als das Vergleichsmittel.

**Patentansprüche**

1. 2-Trifluormethylphenyl-(di)thiophosphorsäureester der Formel

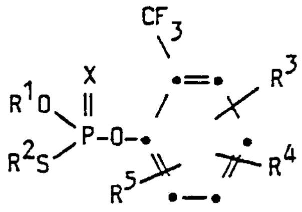

(I)

in der

$R^1$ Alkyl mit 1 bis 3 Kohlenstoffatomen,

$R^2$ Alkyl mit 1 bis 5 Kohlenstoffatomen, Alkoxyalkyl oder Alkylthioalkyl mit 2 bis 8 Kohlenstoffatomen oder Cycloalkyl mit 3 bis 6 Kohlenstoffatomen,

$R^3$, $R^4$, $R^5$ unabhängig voneinander Wasserstoff, Cyan, Halogen, durch gegebenenfalls mit Halogen, Cyano, Alkoxy oder Alkylthio mit jeweils 1 bis 4 Kohlenstoffatomen substituiertes Alkyl mit 1 bis 4 Kohlenstoffatomen und

X Sauerstoff oder Schwefel bedeuten.

2. Schädlingsbekämpfungsmittel, enthaltend einen 2-Trifluormethylphenyl-(di)thiophosphorsäureester der Formel I gemäß Anspruch 1.

3. Schädlingsbekämpfungsmittel, enthaltend inerte Zusatzstoffe und einen 2-Trifluormethylphenyl-(di)thiophosphorsäureester der Formel I gemäß Anspruch 1.

4. Verwendung von 2-Trifluormethylphenyl-(di)thiophosphorsäureestern der Formel I gemäß Anspruch 1 zur Bekämpfung von Schädlingen.

5. Verfahren zur Bekämpfung von Schädlingen, dadurch gekennzeichnet, daß man einen 2-Trifluormethylphenyl-(di)thiophosphorsäureester der Formel I gemäß Anspruch 1 auf die Schädlinge und/oder deren Lebensraum einwirken läßt.

6. Verfahren zur Herstellung von 2-Trifluormethylphenyl-(di)thiophosphorsäureestern der Formel I gemäß Anspruch 1, dadurch gekennzeichnet, daß man ein O,S-Dialkylphosphorsäureesterchlorid der Formel II

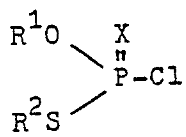

(II)

in der $R^1$, $R^2$ und X die im Anspruch 1 angegebene Bedeutungen haben, gegebenenfalls in Gegenwart eines säurebindenden Mittels und gegebenenfalls in Gegenwart eines Verdünnungsmittels mit einem 2-Trifluormethylphenol der Formel III

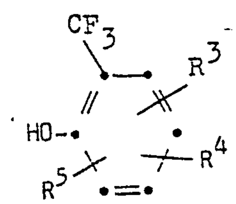

(III)

in der $R^3$, $R^4$ und $R^5$ die im Anspruch 1 genannten Bedeutungen haben, oder mit einem Salz eines 2-Trifluormethylphenols der Formel III gegebenenfalls in Gegenwart eines Verdünnungsmittels umsetzt.

**Claims**

1. A 2-trifluoromethylphenyl (di)thiophosphate of the formula

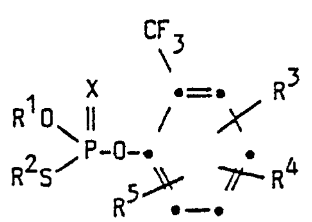

(I)

where

$R^1$ is alkyl of 1 to 3 carbon atoms,

$R^2$ is alkyl of 1 to 5 carbon atoms, alkoxyalkyl or alkylthioalkyl of 2 to 8 carbon atoms or cycloalkyl of 3 to 6 carbon atoms,

$R^3$, $R^4$ and $R^5$ independently of one another are hydrogen, cyano, halogen, alkyl of 1 to 4 carbon atoms, which is optionally substituted by halogen or cyano, or by alkoxy or alkylthio, each of 1 to 4 carbon atoms, and

X is oxygen or sulfur.

2. A pesticide containing a 2-trifluoromethylphenyl (di)thiophosphate of the formula I as claimed in claim 1.

3. A pesticide containing inert additives and a 2-trifluoromethylphenyl (di)thiophosphate of the formula I as claimed in claim 1.

4. The use of 2-trifluoromethylphenyl (di)thiophosphates of the formula I as claimed in claim 1 for combating pests.

5. A process for combating pests, wherein a 2-trifluoromethylphenyl (di)thiophosphate of the formula I as claimed in claim 1 is allowed to act on the pests and/or their habitat.

6. A process for preparing a 2-trifluoromethylphenyl (di)thiophosphate of the formula I as claimed in claim 1, wherein a phosphoric acid O,S-dialkyl ester chloride of the formula II

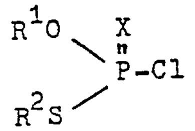

(II)

where $R^1$, $R^2$ and X have the meanings given in claim 1, is reacted with a 2-trifluoromethylphenol of the formula III

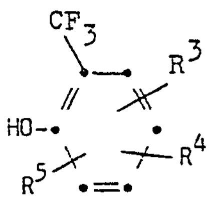

(III)

where $R^3$, $R^4$ and $R^5$ have the meanings given in claim 1, in the presence or absence of an acid acceptor and in the presence or absence of a diluent, or with a salt of a 2-trifluoromethylphenol of the formula III in the presence or absence of a diluent.

**Revendications**

1. Esters de l'acide 2-trifluorométhylphényl-(di)thio-phosphorique de la formule

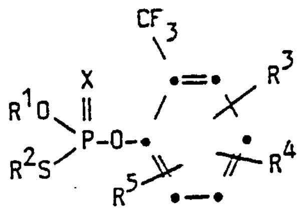

(I)

dans laquelle

$R^1$ désigne un radical alkyle en $C_1$ à $C_3$:

$R_2$ un radical alkyle en $C_1$ à $C_5$, alcoxy-alkyle ou alkyl-thio-alkyle en $C_2$ à $C_8$ ou cycloalkyle en $C_3$ à $C_6$,

$R^3$, $R^4$, $R^5$ sont, indépendamment l'un de l'autre, un tome d'hydrogène ou d'halogène ou un groupe cyano ou un radical alkyle en $C_1$ à $C_4$ éventuellement halo-, cyano-, alkyl-thio- ou alcoxy (en $C_1$ à $C_4$)-substitué et

X désigne un atome d'oxygène ou de soufre.

2. Composition parasiticide, contenant un ester de l'acide 2-trifluorométhylphényl-(di)thio-phosphorique de la formule I selon la revendication 1.

3. Composition parasiticide, contenant un ester de l'acide 2-trifluorométhylphényl-(di)thio-phosphorique de la formule I selon la revendication 1, ainsi que des additifs inertes.

4. Utilisation d'esters de l'acide 2-trifluorométhylphényl-(di)thio-phosphorique de la formule I selon la revendication 1 dans la lutte contre des parasites.

5. Procédé de lutte contre des parasites, caractérisé en ce que l'on laisse agir un ester de l'acide 2-trifluorométhylphényl-(di)thio-phosphorique de la formule I selon la revendication 1 sur les parasites et (ou) leur biotope.

6. Procédé de préparation d'esters de l'acide 2-trifluorométhyl-(di)thio-phosphorique de la formule I selon la revendication 1, caractérisé en ce que l'on fait réagir le chlorure d'un ester d'acide O,S-dialkyl-phosphorique de la formule II

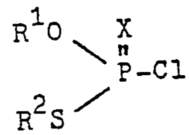

(II)

dans laquelle $R^1$, $R^2$ et X possèdent les significations définies dans la revendication 1, en présence d'un agent fixant les acides et éventuellement d'un diluant, avec un 2-trifluorométhyl-phénol de la formule III

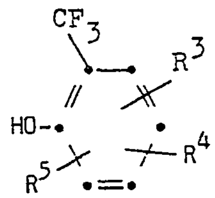

(III)

dans laquelle $R^3$, $R^4$ et $R^5$ possèdent les significations définies dans la revendication 1, ou avec un sel d'un 2-trifluorométhyl-phénol de la formule III, le cas échéant en présence d'un diluant.